# EUROPÄISCHE PATENTSCHRIFT

(11) **EP 3 113 974 B1**
(45) Veröffentlichungstag und Bekanntmachung des Hinweises auf die Patenterteilung: **11.07.2018**
(21) Anmeldenummer: 15708179.5
(22) Anmeldetag: 03.03.2015
(51) Int. Cl.: B60N 2/225, B60N 2/235, B60N 2/68

(54) **DOPPELBESCHLAG FÜR EINEN FAHRZEUGSITZ UND FAHRZEUGSITZ**
DOUBLE FITTING FOR A VEHICLE SEAT, AND VEHICLE SEAT
DOUBLE FERRURE DESTINÉE À UN SIÈGE DE VÉHICULE ET SIÈGE DE VÉHICULE

(30) Priorität: 07.03.2014 DE 102014204285; 12.05.2014 DE 102014208852
(43) Veröffentlichungstag der Anmeldung: 11.01.2017
(73) Patentinhaber: Adient Luxembourg Holding S.à r.l., 1855 Luxembourg (LU)
(72) Erfinder: ALBERT REGINOLD, Kirubaharan, 51399 Burscheid (DE); LEHMANN, Ulrich, 53347 Alfter (DE); KRAUS, Reinhard, 42853 Remscheid (DE); BOSSMANNS DR., Bernd, 40822 Mettmann (DE); SCHUELER, Rolf, 42579 Heiligenhaus (DE)
(74) Vertreter: Liedhegener, Ralf
(86) Internationale Anmeldenummer: PCT/EP2015/054337
(87) Internationale Veröffentlichungsnummer: WO 2015/132215

(56) Entgegenhaltungen:
- EP-A1- 1 574 391
- DE-B3-102006 015 559

## Beschreibung

Die Erfindung betrifft einen Doppelbeschlag für einen Fahrzeugsitz, insbesondere für einen Kraftfahrzeugsitz, mit zwei miteinander wirkverbunden Beschlägen, wobei jeder der beiden Beschläge ein erstes Beschlagteil und ein zweites Beschlagteil aufweist, die relativ zueinander um eine Achse verdrehbar sind, wobei das erste Beschlagteil und das zweite Beschlagteil miteinander in Getriebeverbindung stehen oder miteinander verriegelbar sind, und zwei in axialer Richtung nebeneinander angeordneten Adapterteilen, von denen ein erstes Adapterteil mit einem der beiden ersten Beschlagteile und ein zweites Adapterteil mit dem anderen der beiden ersten Beschlagteile verbunden ist, oder das erste Adapterteil mit einem der beiden zweiten Beschlagteile und das zweite Adapterteil mit dem anderen der beiden zweiten Beschlagteile verbunden ist. Die Erfindung betrifft zudem einen Fahrzeugsitz mit einer eine Lehnenstruktur umfassenden Lehne und einem eine Sitzkissenstruktur umfassenden Sitzkissen, wobei die Lehnenstruktur an der Sitzkissenstruktur mittels eines Doppelbeschlags angelenkt ist (siehe z.B. die DE 10 2006 015 559 B3, dem Oberbegriff entsprechend).

### Stand der Technik

Bei Fahrzeugsitzen mit Gurtintegration, also solchen Fahrzeugsitzen, bei denen einzelne oder alle Befestigungspunkte eines Sicherheitsgurtsystems an dem Fahrzeugsitz angebunden sind, treten aufgrund der Anbindung eines Sicherheitsgurtes oder eines Gurtaufrollmechanismus des Sicherheitsgurtes an der Lehnenoberkante einer Lehne des Fahrzeugsitzes im Crashfall erheblich höhere Lasten in einem als Lehneneinsteller dienenden Beschlag auf, als dies bei Fahrzeugsitzen ohne Gurtintegration der Fall ist. Der erforderliche, hohe Entwicklungsaufwand für speziell auf diese hohen Lasten ausgelegte Beschläge steht aus wirtschaftlicher Sicht häufig im Widerspruch zu den üblicherweise geringen Produktionszahlen derartiger Gurtintegralsitze. Da die Festigkeitsanforderungen an Beschläge in Gurtintegralsitzen häufig im Bereich der doppelten Festigkeit von Beschlägen für konventionelle Sitze ohne Gurtanbindung an der Lehne liegen, werden für Gurtintegralsitze zumeist zwei gleiche Beschläge zu einem Doppelbeschlag parallelgeschaltet und fest miteinander verbunden, um auf wirtschaftliche Weise einen Beschlag für einen Gurtintegralsitz bereitzustellen. Aus der DE 35 29 887 A1 ist ein solcher Doppelbeschlag bekannt.

Bei Parallelschaltung zweier einzelner, starr miteinander verbundener Beschläge zu einem Doppelbeschlag verteilen sich die Lasten im Crashfall auf die beiden miteinander verbundenen Beschläge, so dass die Festigkeitsanforderungen erfüllt werden. Die Mechanismen in den beiden Beschlägen sollten trotz der starren Verbindung miteinander jedoch auch Funktionsanforderungen im Hinblick auf eine Spielfreistellung im Fahrbetrieb und an maximal zulässige Betätigungsmomente beim Einstellen erfüllen, wie diese bei einzelnen Beschlägen üblich sind. Hierzu ist im Stand der Technik jedoch keine befriedigende Lösung bekannt, die diese Funktionsanforderungen erfüllt.

Bei einem Einsatz kontinuierlicher Lehneneinsteller, also klassischer Taumelgetriebebeschläge mit Keilexzentern zur Spielfreistellung, die auch als Getriebebeschläge bezeichnet werden, und beispielsweise aus der DE 10 2011 012 076 A1 bekannt sind, werden bekanntermaßen Bauteiltoleranzen durch ein Keilexzentersystem, umfassend zwei gegeneinander federvorgespannte Keilsegmente, kompensiert. Dabei stellt sich der effektive Achsabstand der beiden Getriebeteile zueinander durch die Keilbewegung auf das jeweils zur Spielfreistellung erforderliche Maß automatisch ein. Im Rahmen der zu erwartenden Gesamtschwankung von Bauteiltoleranzen der Einzelteile eines einzelnen Beschlags gelingt es mit dieser Technologie, spielfreie und dennoch leicht einstellbare Einzelbeschläge wirtschaftlich zu produzieren. Bei einer absolut starren Verbindung zweier Einzelbeschläge miteinander, das heißt einer starren Verbindung zweier erster Beschlagteile miteinander und zweier zweiter Beschlagteile miteinander, bei der ein gleiches Achsabstandsmaß für beide Beschläge auf ein identisches Maß fixiert wird, können sich die effektiv erforderlichen Achsabstände der beiden miteinander verbundenen Beschläge nicht mehr unabhängig voneinander einstellen. Dadurch müssen weitere, höhere Anforderungen an die Toleranzkompensationsfähigkeit der Keilexzentersysteme gestellt werden, oder der zulässige Toleranzbereich der Einzelteile muss weiter eingeschränkt werden, als dies für einzelne Beschläge notwendig ist. Beide Möglichkeiten bedeuten einen Mehraufwand im Produktionsprozess, sei es bei der Herstellung der Einzelteile, der Notwendigkeit, andere Einzelteile miteinander zu montieren oder beim Fügeprozess, bei dem die Einzelbeschläge - präzise zueinander ausgerichtet - miteinander verbunden werden müssen.

Aus der DE 10 2006 000 532 A1 ist ein Doppelbeschlag bekannt, mit zwei miteinander verbunden Beschlägen, wobei jeder der beiden Beschläge ein erstes Beschlagteil und ein zweites Beschlagteil aufweist, die miteinander in Zahneingriff sind. Einer der beiden Beschläge weist einen zwischen dem ersten Beschlagteil und dem zweiten Beschlagteil angeordneten Keilexzenter zur Spielfreistellung des Zahneingriffs auf. Der andere der beiden Beschläge weist anstelle eines Keilexzenters ein Stützelement auf, das zwischen dem ersten Beschlagteil und dem zweiten Beschlagteil angeordnet ist und eine gegenüber dem Keilexzenter des anderen Beschlags kleinere Exzentrizität hat. Im Normalbetrieb des Doppelbeschlags trägt nur der Keilexzenter, nicht jedoch das Stützelement. Nach einer begrenzten Deformation im Doppelbeschlag, wie diese insbesondere bei einer Fahrzeugkollision auftritt, stützt das Stützelement den Verzahnungseingriff zusätzlich ab.

Die DE 10 2004 049 114 B4 offenbart einen Doppelbeschlag, der ein erstes Beschlagteil, ein zweites Beschlagteil und einen Exzenter umfasst, die jeweils auf einer gemeinsamen Drehachse angeordnet sind. Das erste Beschlagteil ist aus zwei ersten Beschlagteilelementen gebildet. Das zweite Beschlagteil ist aus zwei zweiten Beschlagteilelementen gebildet.

Aus der o.g. DE 10 2006 015 559 B3 ist Beschlag für einen Fahrzeugsitz bekannt, mit zwei Einzelbeschlägen, die axial nebeneinander und bezüglich des Kraftflusses parallel angeordnet sind, und die jeweils wenigstens zwei relativ zueinander verdrehbare und mittels eines Exzenterumlaufgetriebes miteinander in Getriebeverbindung stehende Beschlagteile aufweisen, wobei der erste Einzelbeschlag einen Exzenter ohne Spielfreistellung aufweist und der zweite Einzelbeschlag einen Exzenter mit Spielfreistellung aufweist. Ein erstes Adapterteil, das mit einem Beschlagoberteil des ersten Einzelbeschlags verbunden ist, und ein zweites Adapterteil, das mit einem Beschlagoberteil des zweiten Einzelbeschlags verbunden ist, sind mittels Verbindungslaschen fest miteinander verbunden.

Die EP 1 574 391 A1 offenbart einen Fahrzeugsitz mit einer um eine Achse schwenkbaren ersten Sitzkomponente, die wenigstens indirekt mit der Fahrzeugstruktur verriegelbar ist, und einer in axialer Richtung der Achse versetzt angeordneten, schwenkbaren zweiten Sitzkomponente, die mit der ersten Sitzkomponente verriegelbar ist, wobei zum Schwenken und Verriegeln der ersten Sitzkomponente und der zweiten Sitzkomponente wenigstens ein Doppelbeschlag vorgesehen ist.

### Aufgabe

Der Erfindung liegt die Aufgabe zu Grunde, einen Doppelbeschlag der eingangs genannten Art zu verbessern, insbesondere zwei an sich bekannte Beschläge so miteinander zu verbinden, dass deren einwandfreie Funktion bei normalem Gebrauch ohne Mehraufwand gegeben ist, und dennoch im Crashfall beide Beschläge gemeinsam die hohe Last aufnehmen. Zudem soll ein Fahrzeugsitz mit einem solchen Doppelbeschlag zur Verfügung gestellt werden, der hohe Festigkeits- und Funktionsanforderungen erfüllt.

### Lösung

Bei einem erfindungsgemäßen Doppelbeschlag für einen Fahrzeugsitz, insbesondere für einen Kraftfahrzeugsitz, mit zwei miteinander wirkverbunden Beschlägen, wobei jeder der beiden Beschläge ein erstes Beschlagteil und ein zweites Beschlagteil aufweist, die relativ zueinander um eine Achse verdrehbar sind, wobei das erste Beschlagteil und das zweite Beschlagteil miteinander in Getriebeverbindung stehen oder miteinander verriegelbar sind, und mit zwei in axialer Richtung nebeneinander angeordneten Adapterteilen, von denen ein erstes Adapterteil mit einem der beiden ersten Beschlagteile und ein zweites Adapterteil mit dem anderen der beiden ersten Beschlagteile verbunden ist, oder das erste Adapterteil mit einem der beiden zweiten Beschlagteile und das zweite Adapterteil mit dem anderen der beiden zweiten Beschlagteile verbunden ist, ist genau eines der Adapterteile fest mit einem Strukturteil des Fahrzeugsitzes verbindbar oder verbunden, und das andere der beiden Adapterteile begrenzt beweglich, insbesondere um die Achse verdrehbar, zu dem Strukturteil und dem fest mit dem Strukturteil verbindbaren oder verbundenen Adapterteil.

Dadurch, dass genau eines der Adapterteile fest mit einem Strukturteil des Fahrzeugsitzes verbindbar oder verbunden ist und das andere der beiden Adapterteile begrenzt beweglich, insbesondere um die Achse verdrehbar, zu dem Strukturteil und dem fest mit dem Strukturteil verbindbaren oder verbundenen Adapterteil ist, lassen sich zwei an sich bekannte Beschläge so miteinander verbinden, dass diese sich bezüglich der Spielfreistellung nicht nachteilig gegenseitig beeinflussen und deren einwandfreie Funktion bei normalem Gebrauch ohne Mehraufwand gegeben ist. Bei einem in einem Fahrzeugsitz montierten Doppelbeschlag ist nach einer geringen Deformation im Crashfall die Beweglichkeit zwischen den Adapterteilen ausgeschöpft und beide Beschläge nehmen gemeinsam die Crashlast auf. Die Adapterteile können separat von den Beschlagteilen ausgebildet oder in diese integriert sein.

Mit anderen Worten ausgedrückt, wird die Aufgabe dadurch gelöst, dass zwei Beschläge des erfindungsgemäßen Doppelbeschlags auf einer von zwei Getriebeseiten der Beschläge, beispielsweise der dem Sitzkissen zugeordneten Seite, fest miteinander verbunden werden, auf der anderen Seite aber ein freies Spiel zueinander haben, das im normalen Betrieb des Fahrzeugsitzes immer besteht. Somit können beide Beschläge in für wesentliche Funktionseigenschaften relevanten Bereichen entkoppelt voneinander ihre Funktion erfüllen, während im Crashfall, nach einer definierbaren Deformation des ersten Beschlages und/oder eines Strukturteils, dieses Spiel überwunden wird, der zweite Beschlag in Lastrichtung in Kontakt mit dem ersten Beschlag kommt und dann beide Beschläge gemeinsam die Last aufnehmen.

Vorteilhafte Ausgestaltungen, welche einzeln oder in Kombination - insofern sie innerhalb des durch die Ansprüche definierten Schutzes bleiben - miteinander eingesetzt werden können, sind Gegenstand der Unteransprüche.

Eine begrenzte Beweglichkeit zwischen zwei Adapterteilen des Doppelbeschlags lässt sich erfindungsgemäß einfach erreichen, indem eines der beiden Adapterteile einen Vorsprung aufweist, der mit Spiel in eine Aufnahme des anderen der beiden Adapterteile eingreift. Bei einem im Fahrzeugsitz eingebauten Beschlag sind beide Adapterteile und damit beide Beschläge in Lastrichtung fest mit dem Strukturteil verbunden, sobald dieses Spiel durch Deformation in Beschlagteilen und / oder Strukturteilen des Fahrzeugsitzes durchfahren ist.

Vorzugsweise liegt der Vorsprung nach einer begrenzten Relativbewegung zwischen dem ersten Adapterteil und dem zweite Adapterteil an einer Kontaktkontur der Aufnahme an. Die Aufnahme des Adapterteils kann eine Öffnung in diesem Adapterteil sein. Die Kontaktkontur kann eine Zylinderinnenfläche der Öffnung sein. Der Vorsprung des Adapterteils kann eine Durchstellung in diesem Adapterteil sein. Auf diese Wiese lässt sich der erfindungsgemäße Doppelbeschlag kostengünstig herstellen.

Eine hochfeste und symmetrische Verbindung zwischen dem ersten Adapterteil und dem zweiten Adapterteil lässt sich erreichen, indem beide Adapterteile jeweils einen Vorsprung und eine Aufnahme aufweisen, die wechselseitig ineinander greifen.

Eine zusätzliche Festigkeitssteigerung des Doppelbeschlags kann dadurch erzielt werden, dass eine an einem der beiden Adapterteile befestigte Umklammerung in radialer und/oder axialer Richtung das andere der beiden Adapterteile umgreift, ohne die begrenzte Relativbewegung zwischen dem ersten Adapterteil und dem zweiten Adapterteil zu behindern. Die Umklammerung ist insbesondere dann wirksam, wenn das Spiel zwischen Vorsprung und Aufnahme durchfahren ist. Die Wirksamkeit der Umklammerung in axialer Richtung kann jedoch unabhängig von der Relativposition der Adapterteile in Umfangsrichtung sein.

Eine in Umfangsrichtung wirksame Umklammerung ist in einer bevorzugten Ausführung dadurch gekennzeichnet, dass die Umklammerung U-förmig ausgebildet ist und zwei in axiale Richtung weisende Flansche umfasst, die zwischen sich mindestens eines der beiden Adapterteile zumindest teilweise aufnehmen. Die U-Förmige Umklammerung kann mittels eines Schließblechs geschlossen sein, so dass die Umklammerung mindestens ein Adapterteil vollständig abschnittsweise umschließt, was zu einer besonders hochfesten Umklammerung führt.

Mindestens eines der beiden Adapterteile kann eine hakenförmige Umklammerung aufweisen, die das andere der beiden Adapterteile übergreift und in axialer Richtung sichert. Dadurch kann auch eine vergleichsweise kleine und kostengünstige Umklammerung eine hohe axiale Festigkeit zwischen den Adapterteilen bewirken.

Eine bevorzugte Umklammerung kann separat ausgebildet oder in eines der Adapterteile integriert sein. Beide Adapterteile können jeweils mindestens eine Umklammerung aufweisen, so dass sich die beiden Adapterteile wechselseitig umgreifen.

Die Belastung des Doppelbeschlags im Crashfall ist eine komplexe, dreidimensionale Belastung der beiden Beschläge des Doppelbeschlags, da ein an der Oberkante der Lehnenstruktur an dem Gurtaufrollmechanismus befestigter Gurt nach vorn schräg innen zieht, und somit neben einem Hauptdrehmoment in der Ebene der Adapterteile auch eine erhebliche Torsionsbelastung auf den Doppelbeschlag entsteht. Die Umklammerung, die ebenfalls zwischen den beteiligten Bauteilen das erforderliche Spiel aufweisen muss, wirkt der Torsionsbelastung gezielt entgegen und kann die Lastaufnahme des Doppelbeschlags zusätzlich deutlich erhöhen. Die konkrete Ausgestaltung dieser Umklammerung kann vielfältigste Ausführungen annehmen, die beschriebenen Ausführungsbeispiele zeigen lediglich beispielhafte Lösungen.

Besonders kostengünstig lassen sich Doppelbeschläge entwickeln und herstellen, wenn beide Adapterteile Gleichteile sind. Dadurch lassen sich zwei mit einem identischen Werkzeug hergestellte Adapterteile miteinander kombinieren, insbesondere indem sich diese gedreht zueinander gegenüberliegen.

Betrachtet man die Lastaufnahmefähigkeit eines einzelnen Beschlags als Funktion des Lastdrehmomentes über den Verformungswinkel, so ergibt sich für alle Beschläge eines Bautyps ein charakteristischer, im Wesentlichen immer gleicher Verlauf, der durch die Deformation der Beschlagbauteile unter Last bestimmt ist. Je nach Fahrzeug, Fahrzeugsitzkonstruktion und weiteren Randbedingungen ist zwecks Reduzierung der auf den Insassen wirkenden Maximalbelastung häufig ein Abbau der Crashenergie durch gezielte Verformung der Sitzstruktur oder deren Strukturteile gewünscht. Der erfindungsgemäße Doppelbeschlag bietet die Möglichkeit, durch einfache geometrische Gestaltung derartige Verformungen auf einfache Weise gezielt zu steuern, indem der Kontaktgeometrie zwischen den Adapterteilen in Lastrichtung gezielt elastische, deformierbare Zonen zugeordnet werden, die im Crashfall kontrolliert und exakt vorherberechenbar zu dem gewünschten Drehmoment / Winkelverlauf führen.

Der Doppelbeschlag weist vorzugsweise zwei Getriebebeschläge auf. Es kann jedoch auch vorteilhaft sein, einen aus zwei Rastbeschlägen aufgebauten Doppelbeschlag erfindungsgemäß zu gestalten. Auch bei Rastbeschlägen ist die grundsätzliche Problematik der gegenseitigen Funktionsbeeinflussung bei nicht exakter Lage der einzelnen Beschlagmitten zueinander gegeben und kann - beispielsweise beim Überstreichen großer Winkel zur Freischwenkung der Lehne - zu ungewünschten Kontaktsituationen und erhöhten Schwenkkräften führen. Da darüber hinaus ansonsten identische Sitze für unterschiedliche Fahrzeuge teilweise Rastbeschläge zur manuellen Bedienung und im anderen Fall elektrisch betriebene Getriebebeschläge zur elektrifizierten Einstellung aufweisen, und aus diesem Grund die Schnittstellengeometrien modularer Lehneneinstellerfamilien identisch ausgeführt sind, bietet sich die Verwendung gleicher Adapterteile auch für Rastbeschläge an.

Ein erfindungsgemäßer Fahrzeugsitz weist ein erstes Strukturteil und ein zweites Strukturteil auf, wobei das erste Strukturteil mittels eines erfindungsgemäßen Doppelbeschlags an dem zweiten Strukturteil angelenkt ist. Das erste Strukturteil kann eine Lehnenstruktur sein. Das zweite Strukturteil kann eine Sitzkissenstruktur sein.

Ein erfindungsgemäßer Fahrzeugsitz weist eine eine Lehnenstruktur umfassende Lehne und ein eine Sitzkissenstruktur umfassendes Sitzkissen auf, wobei die Lehnenstruktur an der Sitzkissenstruktur mittels eines erfindungsgemäßen Doppelbeschlags angelenkt ist. Die Lehne des erfindungsgemäßen Fahrzeugsitzes kann dadurch hohe Gurtkräfte aufnehmen, ohne dass die Funktionseigenschaften, insbesondere Bedien- und Verstellkräfte, unkomfortabel hoch sind. Der Doppelbeschlag ist vorzugsweise im Bereich einer Sitzaußenseite angeordnet. Auf der gegenüberliegenden Sitzaußenseite kann ein Einzelbeschlag oder ein einfaches Drehlager angeordnet sein.

Genau eines der beiden Adapterteile kann fest mit der Lehnenstruktur des Fahrzeugsitzes verbunden sein, und das andere der beiden Adapterteile begrenzt beweglich, insbesondere um die Achse verdrehbar, zu der Lehnenstruktur und dem fest mit der Lehnenstruktur verbundenen Adapterteil sein. Alternativ kann genau eines der beiden Adapterteile fest mit der Sitzkissenstruktur des Fahrzeugsitzes verbunden sein, und das andere der beiden Adapterteile begrenzt beweglich, insbesondere um die Achse verdrehbar, zu der Sitzkissenstruktur und dem fest mit der Sitzkissenstruktur verbundenen Adapterteil sein.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische, perspektivische Rückansicht einer Lehnenstruktur eines Fahrzeugsitzes mit einem integrierten Gurtaufrollmechanismus und einem Beschlagsystem, umfassend einen Einzelbeschlag und einen Doppelbeschlag,
- Fig. 2:: einen Schnitt durch ein erstes Adapterteil und ein zweites Adapterteil eines erfindungsgemäßen Doppelbeschlags gemäß einem ersten Ausführungsbeispiel,
- Fig. 3:: eine Seitenansicht auf ein erstes Adapterteil und ein zweites Adapterteil eines zweiten Ausführungsbeispiels, wobei das zweite Adapterteil weitgehend durch das erste Adapterteil verdeckt ist,
- Fig. 4:: eine Explosionsdarstellung eines Doppelbeschlags gemäß einem dritten Ausführungsbeispiel,
- Fig. 5:: eine perspektivische Ansicht eines Doppelbeschlags gemäß einem vierten Ausführungsbeispiel,
- Fig. 6:: einen Schnitt durch den Doppelbeschlag aus Fig. 5 entlang der Linie VI - VI,
- Fig. 7:: eine perspektivische Ansicht eines Doppelbeschlags gemäß einem fünften Ausführungsbeispiel,
- Fig. 8:: einen Schnitt durch den Doppelbeschlag aus Fig. 7 entlang der Linie VIII - VIII,
- Fig. 9:: eine Seitenansicht auf ein erstes Adapterteil und ein zweites Adapterteil eines sechsten Ausführungsbeispiels, wobei das zweite Adapterteil weitgehend durch das erste Adapterteil verdeckt ist,
- Fig. 10:: eine Fig. 9 entsprechende Seitenansicht, wobei die beiden Adapterteile relativ zueinander verdreht sind,
- Fig. 11:: eine Explosionsdarstellung einer Hälfte des Doppelbeschlags gemäß dem sechsten Ausführungsbeispiel und
- Fig. 12:: eine Explosionsdarstellung einer Hälfte eines Doppelbeschlags gemäß einer Abwandlung des sechsten Ausführungsbeispiels.

Ein in den Figuren nicht dargestellter Fahrzeugsitz umfasst ein Sitzkissen und eine gegenüber dem Sitzkissen in der Neigung einstellbare Lehne. Dieser grundsätzliche Aufbau ist beispielsweise aus der o.g. DE 10 2006 000 532 A1 bekannt.

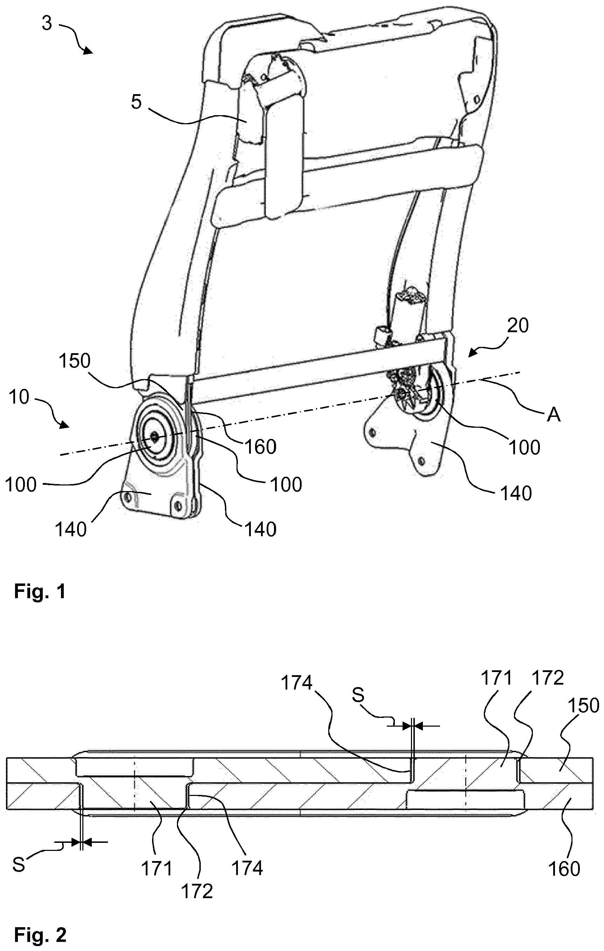

Figur 1 zeigt eine Lehnenstruktur 3 der Lehne des Fahrzeugsitzes aus rückseitiger Ansicht, das heißt auf eine von einem Insassen abgewandte Rückseite der Lehnenstruktur 3.

Die Lehnenstruktur 3 ist mittels eines Beschlagsystems an einer in den Figuren nicht dargestellten Struktur des Sitzkissens angebunden. Das Beschlagsystem umfasst einen erfindungsgemäßen Doppelbeschlag 10 und einen Einzelbeschlag 20. Das Beschlagsystem dient der Einstellung der Neigung der Lehne und der Weiterleitung von Kräften aus der Lehne in die Struktur des Sitzkissens. Der Doppelbeschlag 10 umfasst zwei Beschläge 100 und ist dadurch gegenüber dem Einzelbeschlag 20, der einen Beschlag 100 umfasst, höher mit Kräften und Momenten belastbar, bevor es zu einem Versagen des Doppelbeschlags 10 kommt.

In einem oberen Eckbereich der Lehnenstruktur 3 ist ein Gurtaufrollmechanismus 5 eines den Insassen des Fahrzeugsitzes sichernden Dreipunktgurtsystems angeordnet. Im Crashfall werden über den Gurtaufrollmechanismus 5 Gurtkräfte in die Lehnenstruktur 3 eingeleitet. Diese Gurtkräfte werden größtenteils über den auf einer Außenseite der Lehnenstruktur 3 unterhalb des Gurtaufrollmechanismus 5 angeordneten Doppelbeschlag 10 aufgenommen und in die Struktur des Sitzkissens weitergeleitet, während der auf der gegenüberliegenden Außenseite der Lehnenstruktur 3 angeordnete Einzelbeschlag 20 deutlich geringere Belastungen erfährt und dadurch als einzelne Standardkomponente realisiert werden kann.

In sämtlichen Ausführungsbeispielen besteht der Doppelbeschlag 10 aus zwei identischen, an sich bekannten Beschlägen 100, deren Aufbau dem einen Beschlag 100 des Einzelbeschlags 20 entspricht. Jeder der beiden Beschläge 100 umfasst ein erstes Beschlagteil 111 und ein zweites Beschlagteil 112, die relativ zueinander um eine Achse A verdrehbar sind und welche - im Fall einer Ausbildung der Beschläge 100 als Getriebebeschläge - miteinander in Getriebeverbindung stehen oder - im Fall einer Ausbildung der Beschläge 100 als Rastbeschläge - miteinander verriegelbar sind. Die Achse A definiert die nachfolgend verwendeten Richtungsangaben eines Zylinderkoordinatensystems.

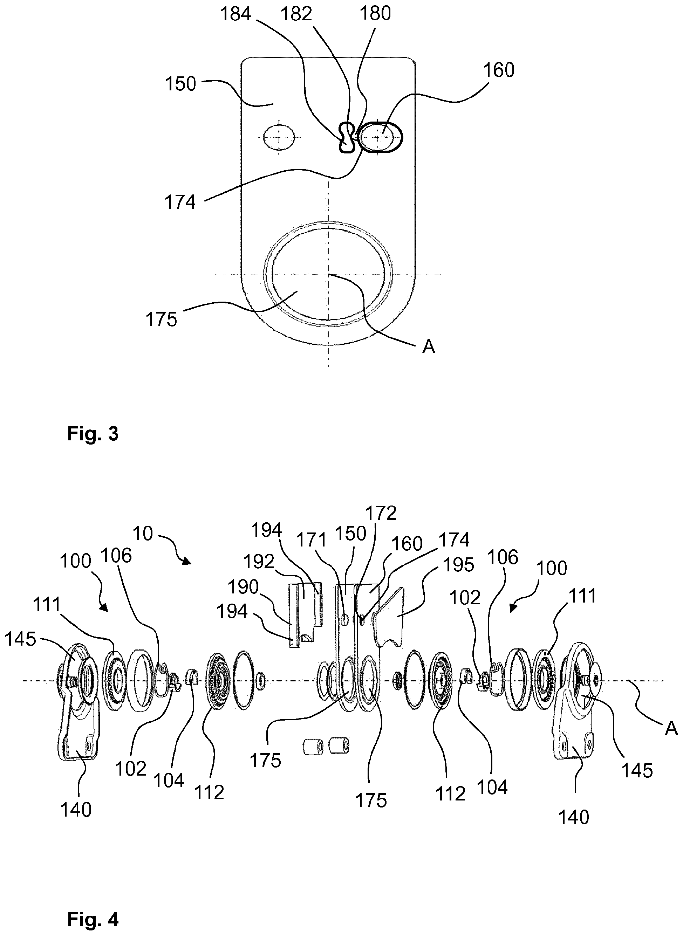

Die Neigung der Lehnenstruktur 3 ist mittels des Beschlagsystems um die Achse A einstellbar. Bei Getriebebeschlägen (Taumelbeschlägen) taumelt die Achse A geringfügig mit einer Exzentrizität der Getriebebeschläge relativ zu einem Fahrzeugkoordinatensystem. Der Grundaufbau eines Doppelbeschlags 10 ist aus den Figuren 4, 11 und 12 ersichtlich.

Die beiden zweiten Beschlagteile 112 sind mittels Adapterteilen an der Lehnenstruktur 3 des Fahrzeugsitzes angebunden. Dabei ist ein erstes Adapterteil 150 an einem der beiden zweiten Beschlagteile 112 und ein zweites Adapterteil 160 an dem anderen der beiden zweiten Beschlagteile 112 angebunden. Dazu weisen die Adapterteile 150, 160 jeweils eine zweite Schnittstelle 175 auf, vorliegend eine Öffnung, in die das zweite Beschlagteil 112 teilweise eingesteckt und mit dem jeweiligen Adapterteil 150, 160 verschweißt ist. Eines der beiden Adapterteile 150, 160, vorliegend das erste Adapterteil 150, ist fest mit der Lehnenstruktur 3 verbunden. Das zweite Adapterteil 160 ist relativ zu dem ersten Adapterteil 150 geringfügig verdrehbar, wie nachfolgend im Detail beschrieben.

Die beiden ersten Beschlagteile 111 der beiden Beschläge 100 des Doppelbeschlags 10 sind gegeneinander gespiegelt angeordnet und im vorliegenden Fall durch zwei Unterteile 140 mittels Schraubverbindungen fest miteinander und mit der Struktur des Sitzkissens verbunden. Die Unterteile 140 weisen jeweils eine erste Schnittstelle 145 auf, vorliegend eine Öffnung, in die das erste Beschlagteil 111 teilweise eingesteckt und mit dem jeweiligen Unterteil 140 verschweißt ist.

In den Figuren sind insgesamt sechs Ausführungsbeispiele eines erfindungsgemäßen Doppelbeschlags 10 dargestellt, die sich insbesondere im Bereich der Adapterteile 150, 160 voneinander unterscheiden.

Figur 2 zeigt einen Schnitt durch ein erstes Ausführungsbeispiel. Die beiden Adapterteile 150, 160 sind ähnlich, vorliegend identisch, aufgebaut und axial gegenüberliegend und aneinander anliegend angeordnet. Die beiden Adapterteile 150, 160 umfassen jeweils einen Vorsprung 171 und eine um einen definierten Betrag größere, bohrungsähnliche Aufnahme 172 mit einer Kontaktkontur 174. Die Kontaktkontur 174 ist vorliegend die zylinderförmige Innenfläche der bohrungsähnlichen Aufnahme 172. In jede Aufnahme 172 greift jeweils ein Vorsprung 171 des anderen Adapterteils 150, 160 ein.

Ein aus einer Durchmesserdifferenz von Vorsprung 171 und Aufnahme 172 resultierendes Spiel S zwischen Vorsprung 171 und Kontaktkontur 174 erlaubt den beiden Adapterteilen 150, 160 und somit den damit verbundenen zweiten Beschlagteilen 112, sich gegeneinander zu bewegen, und verhindert damit eine direkte Beeinflussung der gegenseitigen Funktionalität im normalen Gebrauchsfall und Fahrbetrieb. Der Betrag des Spiels S ist vorzugsweise nicht umlaufend um den Vorsprung 171 konstant, sondern weist umlaufend minimal den erforderlichen Betrag zur Kompensation von Achstoleranzen der beiden Getriebe der beiden Beschläge 100 auf, darüber hinaus aber in einer Fahrtrichtung bzw. in einer Belastungsrichtung gegebenenfalls größere Beträge, die sich aus dem Erfordernis von Zusatzbewegungen bei einer Lehnenbelastung nach vorne oder hinten ergeben.

Eines der beiden Adapterteile 150, 160, vorliegend das erste Adapterteil 150, ist fest mit der Lehnenstruktur 3 verbunden, während das andere der beiden Adapterteile 150, 160, vorliegend das zweite Adapterteil 160, aufgrund des Spiels S relativ zur Lehnenstruktur 3 und zu dem ersten Adapterteil 150 beweglich bleibt und somit im Normalgebrauch weder Betriebslasten erfährt noch beim Einstellen des Lehnenneigungswinkels nennenswerte Drehmomente überwinden muss.

Die Einstellung der Lehnenneigung erfolgt mittels einer in den Figuren nicht dargestellten Übertragungsstange, die den Doppelbeschlag 10 und den Einzelbeschlag 20 miteinander koppelt. Durch Rotation der Übertragungsstange wird jeweils ein Antriebselement eines jeden der drei Beschläge 100 angetrieben. Dabei bewegen der Beschlag 100 des Doppelbeschlags 10, der über das erste Adapterteil 150 unmittelbar mit der Lehnenstruktur 3 verbunden ist, und der Einzelbeschlag 20 die Lehnenstruktur 3 um die Achse A. Der Beschlag 100 des Doppelbeschlags 10, der mit dem zweiten Adapterteil 160 verbunden ist, wird weitgehend unbelastet und im Rahmen seiner Toleranzen synchron angetrieben, ohne jedoch im Kraftfluss zu sein. Dieser Zustand ändert sich, wenn im Falle eines Crashs die elastische oder plastische Verformung des mit dem ersten Adapterteil 150 verbundenen Beschlags 100 bzw. dessen Unterteils 140 den Wert des Spiels S übersteigt, somit in dieser Lastrichtung die beiden Adapterteile 150, 160 in Umfangsrichtung zueinander in Kontakt kommen, und dann im weiteren Verlauf der Belastung beide Einzelbeschläge 100 gemeinsam die eingeleiteten Kräfte aufnehmen.

Figur 3 zeigt ein zweites Ausführungsbeispiel, dessen Funktion und Ausgestaltung dem ersten Ausführungsbeispiel entspricht, soweit nicht nachfolgend abweichend beschrieben. Das erste Adapterteil 150 weist eine Brücke 182 auf, die zwischen der Kontaktkontur 174 und einem Loch 184 im ersten Adapterteil 150 angeordnet ist. Die Brücke 182 bildet gemeinsam mit dem Loch 184 eine Deformationszone 180 neben der Kontaktkontur 174. Vorzugsweise weist auch das zweite Adapterteil 160 eine solche Deformationszone 180 auf. Unter einer hohen Last, insbesondere im Crashfall, deformiert die Deformationszone 180 und wandelt Energie um.

Figur 4 zeigt sämtliche Bauteile eines Doppelbeschlags 10 eines dritten Ausführungsbeispiels. Aufgrund der Explosionsdarstellung ist jeweils ein Spielkompensationsmechanismus eines jeden der beiden, als Getriebebeschläge ausgebildeten, Beschläge 100 erkennbar, wie dieser für sämtliche Ausführungsbeispiele eingesetzt ist. Jeder Spielkompensationsmechanismus besteht aus einem Mitnehmer 102, zwei Keilsegmenten 104 und einer Feder 106. Das Prinzip eines solchen Spielkompensationsmechanismus ist beispielsweise in der DE 10 2009 053 250 A1 beschrieben. Aufgrund der Bauteilanzahl und deren Toleranzen käme es zu einer gegenseitigen Funktionsbeeinträchtigung zwischen den beiden Beschlägen 100 des Doppelbeschlags 10, wenn beide Beschläge 100 sowohl eingangs- als auch ausgangsseitig fest miteinander verbunden wären.

Figur 4 zeigt zudem eine Umklammerung 190 des dritten Ausführungsbeispiels zur Sicherstellung der räumlichen Parallelität der beiden Adapterteile 150, 160. Die Umklammerung 190 weist eine U-förmige Form auf. Die Umklammerung 190 umfasst einen Steg 192 und zwei Flansche 194, die jeweils rechtwinklig vom Steg 192 abstehen. Der Steg 192 verbindet die beiden Flansche 194 miteinander. Der Steg 192 liegt flächig an dem ersten Adapterteil 150 an und ist mit diesem verbunden, vorzugsweise verschweißt. Die beiden Flansche 194 nehmen das erste Adapterteil 150 und das zweite Adapterteil 160 zwischen sich auf, liegen jedoch nicht an diesen an. Zwischen den beiden Flanschen 194 und den Berandungen der Adapterteile 150, 160 ist ein geringfügiger Abstand, der derart gewählt ist, dass sich das zweite Adapterteil 160 in der zuvor beschriebenen Weise relativ zu dem ersten Adapterteil 150 bewegen kann, bevor die Vorsprünge 171 an den Kontaktkonturen 174 anliegen. Nur unter hoher Last liegen die Berandungen der Adapterteile 150, 160 an den Flanschen 194 an, so dass eine weitere Bewegungsmöglichkeit zwischen den Adapterteilen 150, 160, insbesondere in Umfangsrichtung, durch die Umklammerung 190 zusätzlich verhindert ist. In einer Abwandlung des dritten Ausführungsbeispiels ist die Geometrie des ersten Adapterteils 150 abweichend von der Geometrie des zweiten Adapterteils 160 ausgebildet. Die Berandung des ersten Adapterteils 150 liegt an den Flanschen 194 an. Zwischen den beiden Flanschen 194 und der Berandungen des zweiten Adapterteils 160 ist ein geringfügiger Abstand, der derart gewählt ist, dass sich das zweite Adapterteil 160 in der zuvor beschriebenen Weise relativ zu dem ersten Adapterteil 150 bewegen kann, bevor die Vorsprünge 171 an den Kontaktkonturen 174 anliegen.

Die Umklammerung 190 ist vorliegend mit einem Schließblech 195 verbunden, vorzugsweise verschweißt. Die Umklammerung 190 und das Schließblech 195 bilden vorliegend ein Vierkantprofil, das von den beiden Adapterteilen durchlaufen wird. Mittels der mit dem Schließblech 195 geschlossenen Umklammerung 190 können hohe axiale Belastungen von den Adapterteilen 150, 160 aufgenommen werden.

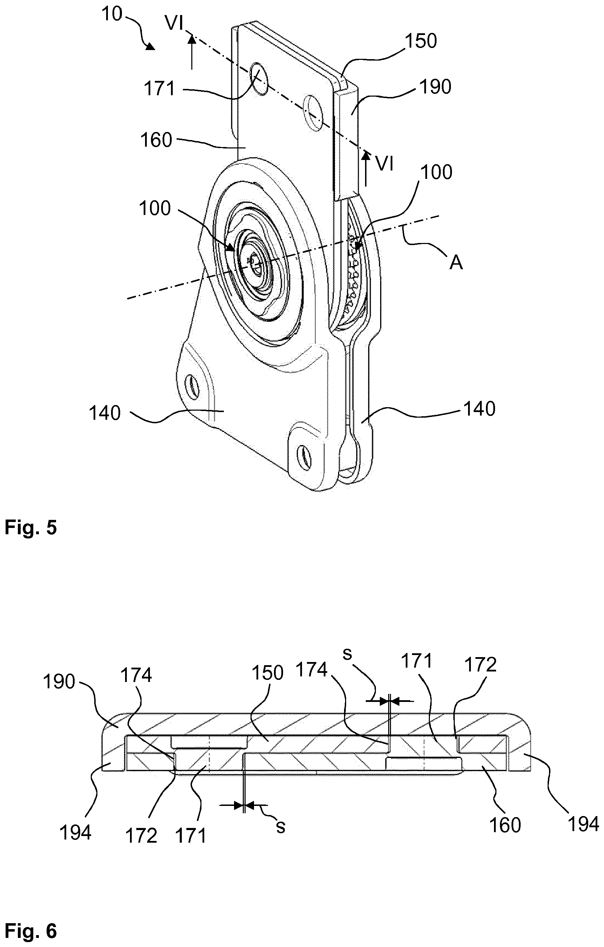

In den Figuren 5 und 6 ist ein viertes Ausführungsbeispiel eines Doppelbeschlags 10 dargestellt, dessen Funktion und Ausgestaltung dem dritten Ausführungsbeispiel weitgehend entspricht. Im Unterschied zum dritten Ausführungsbeispiel weist der Doppelbeschlag 10 des vierten Ausführungsbeispiels zwar auch eine Umklammerung 190, jedoch kein Schließblech 195 auf.

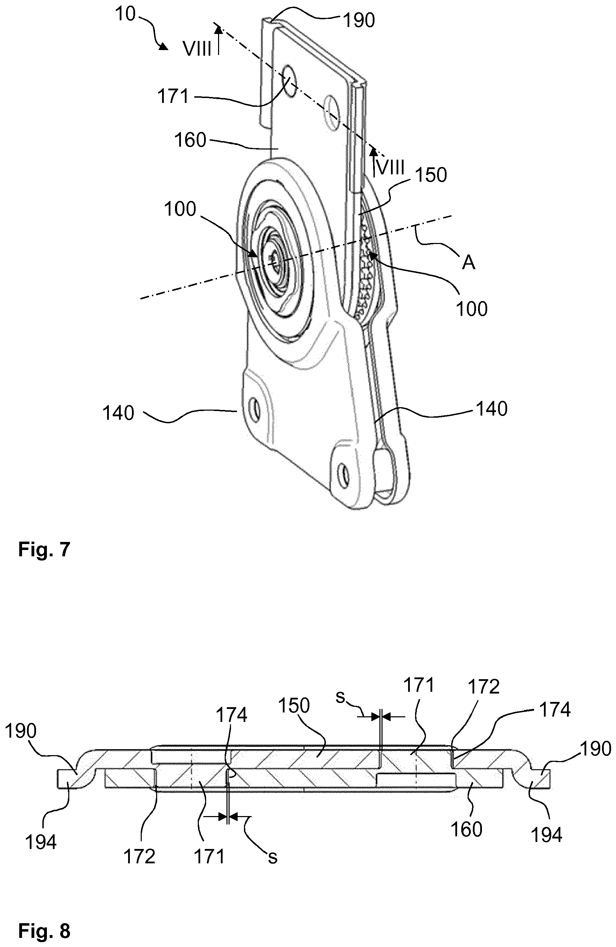

In den Figuren 7 und 8 ist ein fünftes Ausführungsbeispiel eines Doppelbeschlags 10 dargestellt, dessen Funktion und Ausgestaltung weitgehend dem vierten Ausführungsbeispiel entspricht. Im Unterschied zum vierten Ausführungsbeispiel ist die Umklammerung 190 jedoch kein separat ausgebildetes Bauteil, sondern in das erste Adapterteil 150 integriert. Dazu ist an zwei gegenüberliegenden Randbereichen des ersten Adapterteils 150 jeweils ein gekröpfter Flansch 194 ausgebildet. Aufgrund der Integration der Umklammerung 190 in das erste Adapterteil 150 ist dieses nicht identisch mit dem zweiten Adapterteil 160 ausgebildet.

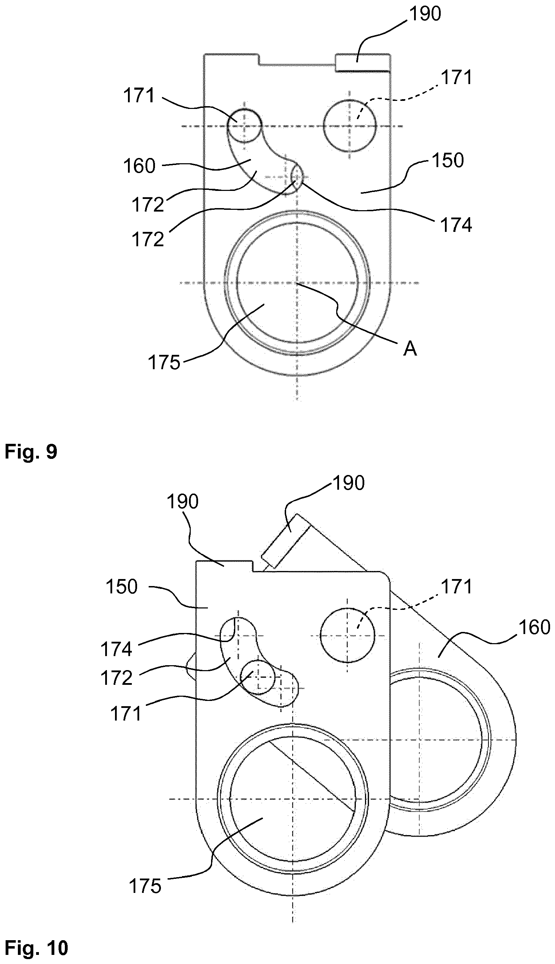

Figur 9 und 10 zeigen ein sechstes Ausführungsbeispiel, bei dem jedes der beiden Adapterteile 150, 160 in einem von der Achse A abgewandten Randbereich eine hakenförmige Umklammerung 190 aufweist, die das jeweils andere der beiden Adapterteile 150, 160 im montierten Zustand übergreift. Die beiden Adapterteile 150, 160 werden während der Montage zuerst aufeinandergelegt und dann zur Erzeugung eines spielbehafteten Übergreifens der Umklammerungen 190 über das jeweils andere Adapterteil 150, 160 zueinander verdreht, bis die beiden Umklammerungen 190 das jeweils andere Adapterteil 150, 160 übergreifen.

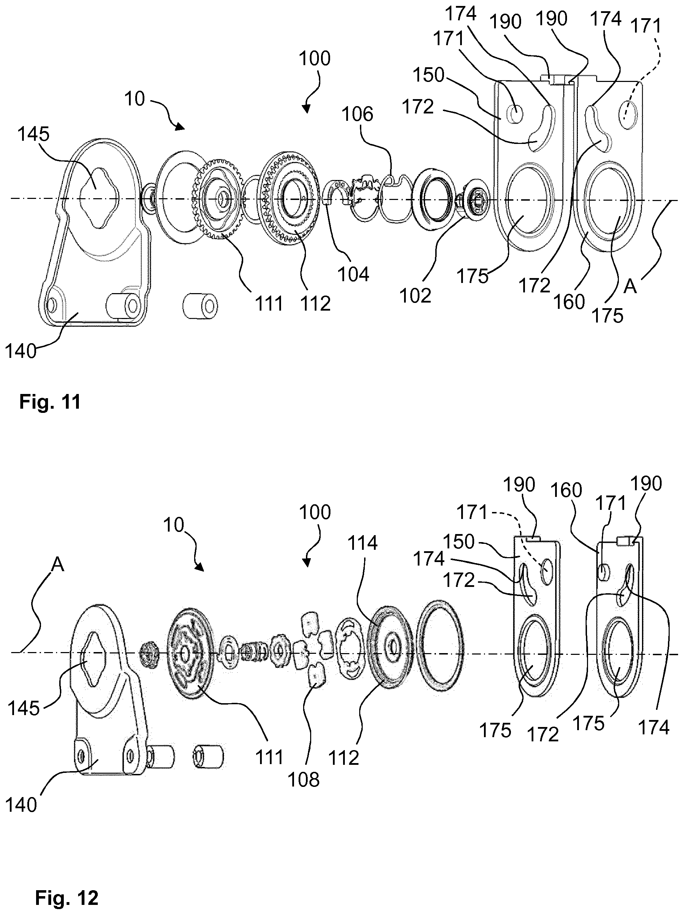

Figur 11 zeigt eine Explosionsdarstellung des sechsten Ausführungsbeispiels. Wie auch bei den Ausführungsbeispielen eins bis fünf sind die beiden Beschläge 100 als Getriebebeschläge 100 mit Keilexzentern ausgeführt.

Die Erfindung ist nicht auf Getriebebeschläge beschränkt. Grundsätzlich kann die erfindungsgemäße Doppelung von Beschlägen 100 für Hochlastanwendungen auch mit Rastbeschlägen erfolgen, wie diese beispielsweise aus der DE 10 2009 041 490 A1 bekannt sind. Figur 12 zeigt eine Explosionsdarstellung einer Hälfte eines Doppelbeschlags 10 gemäß einer Abwandlung des sechsten Ausführungsbeispiels mit zwei Rastbeschlägen 100. Beide Rastbeschläge umfassen jeweils ein erstes Beschlagteil 111 und ein zweites Beschlagteil 112, welche relativ zueinander um die Achse A verdrehbar sind, sowie mehrere Riegel 108, welche in dem ersten Beschlagteil 111 beweglich in radialer Richtung geführt sind und im verriegelten Zustand des Beschlags 100 mit einem Zahnkranz 114 des zweiten Beschlagteils 112 zusammenwirken.

Die in den Ausführungsbeispielen dargestellten Lösungen mit Kombinationen aus Vorsprüngen 171 und Kontaktkonturen 174 in vorzugsweise identischen Adapterteilen 150, 160 stellen nur eine Auswahl möglicher Ausführungsvarianten der Erfindung dar, nämlich der funktionalen Entkopplung zweier miteinander lastaufnehmender Beschläge 100. Ebenso umsetzbar und im Sinne dieser Beschreibung einbezogen sind alle Lösungen, die das Grundprinzip eines Spiels zwischen montierten Beschlägen verwenden, also beispielsweise Schraubverbindungen zwischen einem Adapterteil und der Lehne, bei denen mittels Distanzring oder ähnlichem ein zweites Adapterteil relativ zu einem ersten Adapterteil begrenzt um das Spiel beweglich ist, sowie Lösungen, bei denen das Spiel am unterteilfesten Beschlagsteil realisiert ist. Ebenso vorstellbar sind Nietverbindungen mit Stufenbolzen oder Steckverbindungen, indem beispielsweise bei einer Ausführung gemäß Fig. 4 mit Umklammerung und Schließblech, an dem lehnenfesten Beschlag ein ebenes Oberteilblech in den von der Umklammerung gebildeten, vierseitig geschlossenen Raum eingesteckt und schließlich mittels einer Unterteilverschraubung fixiert wird. Derartige Lösungen können vorteilhaft sein, wenn je nach Produktionsprozess bei einer Lackierung der Lehnenstruktur mit montiertem Doppelbeschlag ein Verkleben der beiden Adapterteile durch den Lack zu befürchten ist, wobei dieses Verkleben üblicherweise durch Definition eines Mindestabstands der Adapterteilflächen mittels Abstandsprägungen oder Ähnlichem verhindert werden kann.

Grundsätzlich ist nicht auszuschließen, dass die sehr nah zueinander montierten, aber entkoppelten Beschläge, bei extremen Verwindungen oder Lasten auf die Lehnenstruktur im Fahrbetrieb in Axialrichtung in Kontakt kommen, was zumindest theoretisch zu einer Geräuschbildung führen könnte. Deshalb sollen im Sinne des oben beschriebenen Spiels auch derartige Lösungen verstanden werden, bei denen das eigentliche Spiel zwischen den starren, metallischen Bauteilen mit Materialien überbrückt sein kann, die eine hohe Verformung bei geringen Kräften aufweisen, also weiche Kunststoffe oder Elastomere.

### Bezugszeichenliste

- 3: Lehnenstruktur
- 5: Gurtaufrollmechanismus
- 10: Doppelbeschlag
- 20: Einzelbeschlag
- 100: Beschlag
- 102: Mitnehmer
- 104: Keilsegment
- 106: Feder
- 108: Riegel
- 111: erstes Beschlagteil
- 112: zweites Beschlagteil
- 114: Zahnkranz
- 140: Unterteil
- 145: erste Schnittstelle
- 150: erstes Adapterteil
- 160: zweites Adapterteil
- 171: Vorsprung
- 172: Aufnahme
- 174: Kontaktkontur
- 175: zweite Schnittstelle
- 180: Deformationszone
- 182: Brücke
- 184: Loch
- 190: Umklammerung
- 192: Steg
- 194: Flansch
- 195: Schließblech
- A: Achse
- S: Spiel

## Patentansprüche

1. Doppelbeschlag (10) für einen Fahrzeugsitz, insbesondere für einen Kraftfahrzeugsitz, mit zwei miteinander wirkverbunden Beschlägen (100), wobei jeder der beiden Beschläge (100) ein erstes Beschlagteil (111) und ein zweites Beschlagteil (112) aufweist, die relativ zueinander um eine Achse (A) verdrehbar sind, wobei das erste Beschlagteil (111) und das zweite Beschlagteil (112) miteinander in Getriebeverbindung stehen oder miteinander verriegelbar sind, und zwei in axialer Richtung nebeneinander angeordneten Adapterteilen (150, 160), von denen ein erstes Adapterteil (150) mit einem der beiden ersten Beschlagteile (111) und ein zweites Adapterteil (160) mit dem anderen der beiden ersten Beschlagteile (111) verbunden ist, oder das erste Adapterteil (150) mit einem der beiden zweiten Beschlagteile (112) und das zweite Adapterteil (160) mit dem anderen der beiden zweiten Beschlagteile (112) verbunden ist, **dadurch gekennzeichnet, dass** genau eines der Adapterteile (150, 160) fest mit einem Strukturteil (3) des Fahrzeugsitzes verbindbar ist und das andere der beiden Adapterteile (150, 160) begrenzt beweglich, insbesondere um die Achse (A) verdrehbar, zu dem Strukturteil (3) und dem fest mit dem Strukturteil (3) verbindbaren Adapterteil (150, 160) ist und dass eines der beiden Adapterteile (150, 160) einen Vorsprung aufweist, der mit Spiel (S) in eine Aufnahme (172) des anderen der beiden Adapterteile (150, 160) eingreift.

2. Doppelbeschlag (10) nach Anspruch 1, **dadurch gekennzeichnet, dass** das andere der beiden Adapterteile (150, 160) begrenzt verdrehbar um die Achse (A) zu dem Strukturteil (3) und dem fest mit dem Strukturteil (3) verbindbaren Adapterteil (150, 160) ist.

3. Doppelbeschlag (10) nach Anspruch 1, **dadurch gekennzeichnet, dass** der Vorsprung (171) nach einer begrenzten Relativbewegung zwischen dem ersten Adapterteil (150) und dem zweite Adapterteil (160) an einer Kontaktkontur (174) der Aufnahme (172) anliegt.

4. Doppelbeschlag (10) nach Anspruch 1 oder 3, **dadurch gekennzeichnet, dass** das erste Adapterteil (150) und das zweite Adapterteil (160) jeweils einen Vorsprung (171) und eine Aufnahme (172) aufweisen, die wechselseitig ineinander greifen.

5. Doppelbeschlag (10) nach einem der Ansprüche 1 und 3 bis 4, **dadurch gekennzeichnet, dass** die Aufnahme (172) des Adapterteils (150, 160) eine Öffnung in diesem Adapterteil (150, 160) ist.

6. Doppelbeschlag (10) nach einem der Ansprüche 1 und 3 bis 5, **dadurch gekennzeichnet, dass** eine an einem der beiden Adapterteile (150, 160) befestigte Umklammerung (190) das andere der beiden Adapterteile (150, 160) umgreift, ohne die begrenzte Relativbewegung zwischen dem ersten Adapterteil (150) und dem zweite Adapterteil (160) zu behindern.

7. Doppelbeschlag (10) nach Anspruch 6, **dadurch gekennzeichnet, dass** die Umklammerung (190) U-förmig ausgebildet ist und zwei in axiale Richtung weisende Flansche (194) umfasst, die zwischen sich mindestens eines der beiden Adapterteile (150, 160) zumindest teilweise aufnehmen.

8. Doppelbeschlag (10) nach einem der Ansprüche 1 und 3 bis 7, **dadurch gekennzeichnet, dass** mindestens eines der beiden Adapterteile (150, 160) eine hakenförmige Umklammerung (190) aufweist, die das andere der beiden Adapterteile (150, 160) übergreift und in axialer Richtung sichert.

9. Doppelbeschlag (10) nach einem der Ansprüche 1 bis 8, **dadurch gekennzeichnet, dass** die beiden Adapterteile (150, 160) Gleichteile sind.

10. Fahrzeugsitz mit einem ersten Strukturteil (3) und einem zweiten Strukturteil, wobei das erste Strukturteil an dem zweiten Strukturteil mittels eines Doppelbeschlags (10) nach einem der Ansprüche 1 bis 9 angelenkt ist.

11. Fahrzeugsitz mit einer eine Lehnenstruktur (3) umfassenden Lehne und einem eine Sitzkissenstruktur umfassenden Sitzkissen, wobei die Lehnenstruktur (3) an der Sitzkissenstruktur mittels eines Doppelbeschlags (10) nach einem der Ansprüche 1 bis 9 angelenkt ist.

12. Fahrzeugsitz nach Anspruch 11, **dadurch gekennzeichnet, dass** genau eines der Adapterteile (150, 160) fest mit der Lehnenstruktur (3) des Fahrzeugsitzes verbunden ist und das andere der beiden Adapterteile (150, 160) begrenzt beweglich, insbesondere um die Achse (A) verdrehbar, zu der Lehnenstruktur (3) und dem fest mit der Lehnenstruktur (3) verbundenen Adapterteil (150, 160) ist, oder dass
genau eines der Adapterteile (150, 160) fest mit der Sitzkissenstruktur des Fahrzeugsitzes verbunden ist und das andere der beiden Adapterteile (150, 160) begrenzt beweglich, insbesondere um die Achse (A) verdrehbar, zu der Sitzkissenstruktur und dem fest mit der Sitzkissenstruktur verbundenen Adapterteil (150, 160) ist.

13. Fahrzeugsitz nach einem der Ansprüche 11 bis 12, **dadurch gekennzeichnet, dass** die Lehnenstruktur (3) mittels eines Doppelbeschlags (10) nach einem der Ansprüche 1 bis 9 und eines Einzelbeschlags (20) an der Sitzkissenstruktur angelenkt ist.

14. Fahrzeugsitz nach Anspruch 13, **dadurch gekennzeichnet, dass** der Doppelbeschlag (10) im Bereich einer ersten Sitzaußenseite angeordnet ist und der Einzelbeschlag (20) auf einer der ersten Sitzaußenseite gegenüberliegenden zweiten Sitzaußenseite angeordnet ist.

## Claims

1. Double fitting (10) for a vehicle seat, in particular for a motor vehicle seat, having two fittings (100) which are operatively connected to one another, wherein each of the two fittings (100) has a first fitting part (111) and a second fitting part (112) which are rotatable relative to one another about an axis (A), wherein the first fitting part (111) and the second fitting part (112) are in geared connection with one another or can be locked together, and two adapter parts (150, 160) which are arranged adjacent to one another in an axial direction and of which a first adapter part (150) is connected to one of the two first fitting parts (111) and a second adapter part (160) is connected to the other of the two first fitting parts (111), or the first adapter part (150) is connected to one of the two second fitting parts (112) and the second adapter part (160) is connected to the other of the two second fitting parts (112), **characterized in that** exactly one of the adapter parts (150, 160) is fixedly connectable to a structure part (3) of the vehicle seat and the other of the two adapter parts (150, 160) is movable to a limited extent, in particular rotatable about the axis (A), relative to the structure part (3) and relative to the adapter part (150, 160) which is fixedly connectable to the structure part (3) and **in that** one of the two adapter parts (150, 160) has a projection which engages with play (S) into a receptacle (172) of the other of the two adapter parts (150, 160).

2. Double fitting (10) according to Claim 1, **characterized in that** the other of the two adapter parts (150, 160) is rotatable to a limited extent about the axis (A) relative to the structure part (3) and relative to the adapter part (150, 160) which is fixedly connectable to the structure part (3) .

3. Double fitting (10) according to Claim 1, **characterized in that**, after a limited relative movement between the first adapter part (150) and the second adapter part (160), the projection (171) bears against a contact contour (174) of the receptacle (172).

4. Double fitting (10) according to Claim 1 or 3, **characterized in that** the first adapter part (150) and the second adapter part (160) each have a projection (171) and a receptacle (172) which engage reciprocally into one another.

5. Double fitting (10) according to one of Claims 1 and 3 to 4, **characterized in that** the receptacle (172) of the adapter part (150, 160) is an opening in said adapter part (150, 160).

6. Double fitting (10) according to one of Claims 1 and 3 to 5, **characterized in that** an engaging-around portion (190), which is fastened to one of the two adapter parts (150, 160), engages around the other of the two adapter parts (150, 160) without impeding the limited relative movement between the first adapter part (150) and the second adapter part (160).

7. Double fitting (10) according to Claim 6, **characterized in that** the engaging-around portion (190) is of U-shaped form and comprises two flanges (194) which point in an axial direction and which, between them, at least partially receive at least one of the two adapter parts (150, 160).

8. Double fitting (10) according to one of Claims 1 and 3 to 7, **characterized in that** at least one of the two adapter parts (150, 160) has a hook-shaped engaging-around portion (190) which engages over the other of the two adapter parts (150, 160) and secures the latter in an axial direction.

9. Double fitting (10) according to one of Claims 1 to 8, **characterized in that** the two adapter parts (150, 160) are identical parts.

10. Vehicle seat having a first structure part (3) and a second structure part, wherein the first structure part is articulated on the second structure part by way of a double fitting (10) according to one of Claims 1 to 9.

11. Vehicle seat having a backrest, which comprises a backrest structure (3), and having a seat cushion, which comprises a seat cushion structure, wherein the backrest structure (3) is articulated on the seat cushion structure by way of a double fitting (10) according to one of Claims 1 to 9.

12. Vehicle seat according to Claim 11, **characterized in that**
exactly one of the adapter parts (150, 160) is fixedly connected to the backrest structure (3) of the vehicle seat and the other of the two adapter parts (150, 160) is movable to a limited extent, in particular rotatable about the axis (A), relative to the backrest structure (3) and relative to the adapter part (150, 160) which is fixedly connected to the backrest structure (3),
or **in that**
exactly one of the adapter parts (150, 160) is fixedly connected to the seat cushion structure of the vehicle seat and the other of the two adapter parts (150, 160) is movable to a limited extent, in particular rotatable about the axis (A), relative to the seat cushion structure and relative to the adapter part (150, 160) which is fixedly connected to the seat cushion structure.

13. Vehicle seat according to either of Claims 11 and 12, **characterized in that** the backrest structure (3) is articulated on the seat cushion structure by way of a double fitting (10) according to one of Claims 1 to 9 and a single fitting (20).

14. Vehicle seat according to Claim 13, **characterized in that** the double fitting (10) is arranged in the region of a first seat outer side, and the single fitting (20) is arranged on a second seat outer side which is situated opposite the first seat outer side.

## Revendications

1. Double ferrure (10) destinée à un siège de véhicule, en particulier à un siège de véhicule automobile, avec deux ferrures (100) en liaison active l'une avec l'autre, dans laquelle chacune des deux ferrures (100) présente une première partie de ferrure (111) et une seconde partie de ferrure (112), qui peuvent tourner l'une par rapport à l'autre autour d'un axe (A), dans laquelle la première partie de ferrure (111) et la seconde partie de ferrure (112) se trouvent en liaison de transmission l'une avec l'autre ou peuvent être verrouillées l'une à l'autre, et avec deux parties d'adaptateur (150, 160) disposées l'une à côté de l'autre en direction axiale, parmi lesquelles une première partie d'adaptateur (150) est reliée à une des deux premières parties de ferrure (111) et une seconde partie d'adaptateur (160) est reliée à l'autre des deux premières parties de ferrure (111), ou la première partie d'adaptateur (150) est reliée à une des deux secondes parties de ferrure (112) et la seconde partie d'adaptateur (160) est reliée à l'autre des deux secondes parties de ferrure (112), **caractérisée en ce qu'**exactement une des parties d'adaptateur (150, 160) peut être reliée de façon fixe à une partie de structure (3) du siège de véhicule et l'autre des deux parties d'adaptateur (150, 160) est mobile de façon limitée, en particulier peut tourner autour de l'axe (A), par rapport à la partie de structure (3) et à la partie d'adaptateur (150, 160) pouvant être reliée de façon fixe à la partie de structure (3) et **en ce qu'**une des deux parties d'adaptateur (150, 160) présente une saillie, qui s'engage avec du jeu dans un logement (172) de l'autre des deux parties d'adaptateur (150, 160).

2. Double ferrure (10) selon la revendication 1, **caractérisée en ce que** l'autre des deux parties d'adaptateur (150, 160) peut tourner de façon limitée autour de l'axe (A) par rapport à la partie de structure (3) et à la partie d'adaptateur (150, 160) pouvant être reliée de façon fixe à la partie de structure (3).

3. Double ferrure (10) selon la revendication 1, **caractérisée en ce que** la saillie (171) s'applique sur un contour de contact (174) du logement (172) après un mouvement relatif limité entre la première partie d'adaptateur (150) et la seconde partie d'adaptateur (160) .

4. Double ferrure (10) selon la revendication 1 ou 3, **caractérisée en ce que** la première partie d'adaptateur (150) et la seconde partie d'adaptateur (160) présentent chacune une saillie (171) et un logement (172), qui s'engagent mutuellement l'un dans l'autre.

5. Double ferrure (10) selon l'une quelconque des revendications 1 et 3 à 4, **caractérisée en ce que** le logement (172) de la partie d'adaptateur (150, 160) est une ouverture dans cette partie d'adaptateur (150, 160).

6. Double ferrure (10) selon l'une quelconque des revendications 1 et 3 à 5, **caractérisée en ce qu'**une attache (190) fixée à une des deux parties d'adaptateur (150, 160) entoure l'autre des deux parties d'adaptateur (150, 160), sans empêcher le mouvement relatif limité entre la première partie d'adaptateur (150) et la seconde partie d'adaptateur (160).

7. Double ferrure (10) selon la revendication 6, **caractérisée en ce que** l'attache (190) est réalisée en forme de U et comprend deux ailes (194) orientées en direction axiale, qui hébergent au moins partiellement entre elles au moins une des deux parties d'adaptateur (150, 160).

8. Double ferrure (10) selon l'une quelconque des revendications 1 et 3 à 7, **caractérisée en ce qu'**au moins une des deux parties d'adaptateur (150, 160) présente une attache en forme de crochet (190), qui chevauche l'autre des deux parties d'adaptateur (150, 160) et la bloque en direction axiale.

9. Double ferrure (10) selon l'une quelconque des revendications 1 à 8, **caractérisée en ce que** les deux parties d'adaptateur (150, 160) sont des pièces identiques.

10. Siège de véhicule avec une première partie de structure (3) et une seconde partie de structure, dans lequel la première partie de structure est articulée sur la seconde partie de structure au moyen d'une double ferrure (10) selon l'une quelconque des revendications 1 à 9.

11. Siège de véhicule avec un dossier comprenant une structure de dossier et un coussin de siège comprenant une structure de coussin de siège, dans lequel la structure de dossier (3) est articulée sur la structure de coussin de siège au moyen d'une double ferrure (10) selon l'une quelconque des revendications 1 à 9.

12. Siège de véhicule selon la revendication 11, **caractérisé en ce qu'**exactement une des parties d'adaptateur (150, 160) est reliée de façon fixe à la structure de dossier (3) du siège de véhicule et l'autre des deux parties d'adaptateur (150, 160) est mobile de façon limitée, en particulier peut tourner autour de l'axe (A), par rapport à la structure de dossier (3) et à la partie d'adaptateur (150, 160) reliée de façon fixe à la structure de dossier (3), ou **en ce qu'**exactement une des parties d'adaptateur (150, 160) est reliée de façon fixe à la structure de coussin de siège du siège de véhicule et l'autre des deux parties d'adaptateur (150, 160) est mobile de façon limitée, en particulier peut tourner autour de l'axe (A), par rapport à la structure de coussin de siège et à la partie d'adaptateur (150, 160) reliée de façon fixe à la structure de coussin de siège.

13. Siège de véhicule selon une des revendications 11 à 12, **caractérisé en ce que** la structure de dossier (3) est articulée sur la structure de coussin de siège au moyen d'une double ferrure (10) selon l'une quelconque des revendications 1 à 9 et d'une ferrure simple (20).

14. Siège de véhicule selon la revendication 13, **caractérisé en ce que** la ferrure double (10) est disposée dans la région d'un premier côté extérieur du siège et la ferrure simple (20) est disposée sur un côté extérieur du siège opposé au premier côté extérieur du siège.
